(19) Europäisches Patentamt
European Patent Office
Office européen des brevets

(11) **EP 2 509 765 B1**

(12) **EUROPÄISCHE PATENTSCHRIFT**

(45) Veröffentlichungstag und Bekanntmachung des Hinweises auf die Patenterteilung:
**22.01.2014 Patentblatt 2014/04**

(21) Anmeldenummer: **10787746.6**

(22) Anmeldetag: **03.12.2010**

(51) Int Cl.:
**B29C 47/40** (2006.01)   **B29C 47/60** (2006.01)

(86) Internationale Anmeldenummer:
**PCT/EP2010/068794**

(87) Internationale Veröffentlichungsnummer:
**WO 2011/069896 (16.06.2011 Gazette 2011/24)**

(54) **VERFAHREN ZUR KONSTRUKTION GLEICHSINNIG ROTIERENDER, SICH BERÜHRENDER KÖRPER**

METHOD FOR CONSTRUCTING BODIES THAT ROTATE IN THE SAME DIRECTION AND ARE IN CONTACT WITH ONE ANOTHER

PROCÉDÉ DE CONSTRUCTION DE CORPS COROTATIFS ENTRANT EN CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2009 DE 102009057139**

(43) Veröffentlichungstag der Anmeldung:
**17.10.2012 Patentblatt 2012/42**

(73) Patentinhaber: **Bayer Intellectual Property GmbH 40789 Monheim (DE)**

(72) Erfinder:
• **KÖNIG, Thomas 51375 Leverkusen (DE)**
• **BIERDEL, Michael 51373 Leverkusen (DE)**

(74) Vertreter: **BIP Patents c/o Bayer Intellectual Property GmbH Creative Campus Monheim Alfred-Nobel-Straße 10 40789 Monheim (DE)**

(56) Entgegenhaltungen:
**EP-A2- 1 093 905     WO-A1-2004/009326 US-A- 3 900 187**

EP 2 509 765 B1

**Beschreibung**

Die Erfindung betrifft ein Verfahren zur Konstruktion von Körpern, die sich bei der gleichsinnigen Rotation mit gleicher Drehzahl um parallel angeordnete Achsen stets in mindestens einem Punkt berühren.

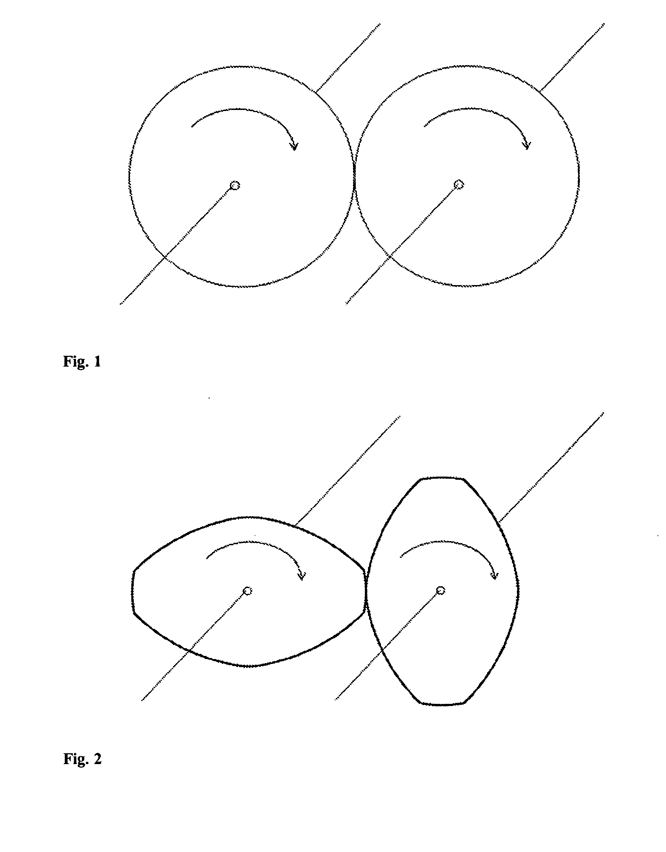

Es seien zwei Kreise betrachtet, die auf zwei parallelen Achsen wie in Figur 1 schematisch dargestellt nebeneinander angeordnet sind. Es ist allgemein bekannt, dass sich die Kreise bei einer gleichsinnigen Rotation in der Weise streifen, dass sie sich bei der Rotation stets in einem Punkt berühren, der zwischen den Drehmittelpunkten der Kreise liegt.

Weiterhin ist bekannt, dass es neben Kreisen weitere geometrische Figuren gibt, die sich bei einer gleichsinnigen Rotation stets in einem Punkt tangieren. Ein Beispiel ist in Figur 2 gezeigt. Diese Figuren berühren sich bei einer gleichsinnigen Rotation mit gleicher Drehzahl stets in einem Punkt.

Die in den Figuren 1 und 2 gezeigten zweidimensionalen geometrischen Figuren lassen sich auf verschiedene Weise in die dritte Dimension fortsetzen. Eine einfache Möglichkeit ist z.B. die lineare Fortsetzung der Figuren in Richtung der Drehachsen, so dass scheiben- oder stangenförmige Körper entstehen, die sich bei einer gleichsinnigen Rotation entlang einer Linie zwischen den Drehmittelpunkten, die parallel zu den Drehachsen verläuft, streifen.

Eine weitere Möglichkeit besteht z.B. darin, die geometrischen Figuren entlang der Drehachsen schraubenförmig fortzusetzen, so dass schraubenförmige Körper entstehen, die sich bei gleichsinniger Rotation entlang einer Kurve zwischen den Körpern berühren.

Bedeutung haben solche Körper, die sich bei gleichsinniger Rotation mit gleicher Drehzahl um parallel angeordnete Achsen stets in mindestens einem Punkt berühren, insbesondere in der Extrudertechnik, wo sie als gleichsinnig drehende Schneckenextruder z.B. zur Verarbeitung viskoser Massen oder zu Mischzwecken eingesetzt werden. Solche gleichläufigen Zwei- und Mehrwellenextruder sind dem Fachmann aus der Patent- und Fachliteratur bekannt. Beispielhaft sei hier die folgende Veröffentlichung [1] erwähnt: K. Kohlgrüber: "Der gleichläufige Doppelschneckenextruder", Hanser Verlag, 2007. Bei Schneckenextrudern hat die Eigenschaft, dass sich benachbarte Schnecken bei gleichsinniger Rotation paarweise streifen, den Vorteil, dass sie sich gegenseitig abschaben und daher gegenseitig abreinigen.

Es gibt für ausgewählte Körper, die sich bei gleichsinniger Rotation mit gleicher Drehzahl um parallel angeordnete Achsen stets in mindestens einem Punkt tangieren, Vorschriften zu ihrer Konstruktion.

So ist z.B. aus der Literatur für Schneckenextruder bekannt (siehe z.B. [1] Seiten 96 bis 98), dass sich ein Schneckenelement vom Typ "Erdmenger", mit einem Querschnittsprofil wie in Fig. 2 der vorliegenden Anmeldung, aus Kreisbögen zusammensetzen lässt.

Es ist jedoch nicht bekannt, welche Kriterien allgemein erfüllt sein müssen, damit sich zwei gleichsinnig um zwei parallel angeordnete Achsen rotierende Körper stets in mindestens einem Punkt tangieren.

Es ist bekannt (siehe z.B. [2]: Booy "Geometry of fully wiped twin-screw equipment", Polymer Engineering and Science 18 (1978) 12, Seiten 973 - 984), dass die gleichsinnige Rotation zweier tangierender Körper um ihre ortsfesten Achsen kinematisch gleichwertig mit der "Schiebung ohne Rotation" eines Körpers um den anderen, dann feststehenden Körper ist. Diese Besonderheit kann dazu verwendet werden, schrittweise geometrische Figuren zu erzeugen, die sich bei gleichsinniger Rotation stets in einem Punkt tangieren. Die erste Figur (die "erzeugte") steht bei der Betrachtung still und die zweite Figur (die "erzeugende") wird um die erste translatorisch auf einem Kreisbogen verschoben. Man kann nun einen Teil des Profils der zweiten Figur vorgeben und untersuchen, welches Profil auf der ersten Figur dadurch erzeugt wird. Die erzeugte Figur wird durch die erzeugende gewissermaßen "herausgeschnitten".

US3900187 A, WO2004/009326 A1 und EP1093905 A2 offenbaren :

- ein Verfahren zur Erzeugung von zwei Körpern K1 und K2 , die sich bei gleichsinniger Rotation mit gleicher Drehzahl um zwei, in einem Abstand a parallel zueinander angeordnete Drehachsen A1 und A2 stets in mindestens einem Punkt berühren,
- wobei in einer Ebene E senkrecht zu den Drehachsen ein Querschnittsprofil des Körpers K1 durch eine stetige, abschnittsweise stetig differenzierbare, geschlossene, konvexe Kurve pv gebildet wird, und das Querschnittsprofil des Körpers K2 aus der Kurve qv gebildet wird, wobei
- die Kurve pv in jedem Punkt einen Krümmungsradius aufweist, der kleiner oder gleich dem Abstand a ist, wobei
- einem Knick im Querschnittsprofil des Körpers K1 das Querschnittsprofil des Körpers K2 einen Kreisbogen aufweist, dessen Radius dem Achsabstand a entspricht und dessen Winkel demjenigen Winkel entspricht, in dem die Tangenten an die Kurvenabschnitte der Kurve im Knickpunkt aneinanderstoßen.

Es ist jedoch kein allgemeines Verfahren bekannt, wie der Teil der zweiten Figur, der vorgegeben wird, selbst zu erzeugen ist. In [2] ist ein möglicher Ansatz beschrieben, wie der Profilabschnitt, von dem man ausgehen kann und aus dem das restliche Profil erzeugt wird, generiert werden kann. Dieser Ansatz ist jedoch mathematisch sehr aufwändig und vor allem nicht allgemeingültig, das heißt, es lassen sich nur solche Profile erzeugen, die sich durch die in [2] angegebenen mathematischen Funktionen beschreiben lassen.

Es stellt sich daher ausgehend vom Stand der Technik die Aufgabe, ein allgemeines Verfahren bereitzustellen, mit dem Körper konstruiert werden können, die sich bei gleichsinniger Rotation mit gleicher Drehzahl um zwei parallel angeordnete Achsen stets in mindestens einem Punkt berühren.

Überraschend wurden die Grundprinzipien gefunden, die zwei Körpern zu Grunde liegen, die sich bei gleichsinniger Rotation um zwei parallel zueinander angeordnete Achsen stets in mindestens einem Punkt berühren,.

Ausgehend von diesen Grundprinzipien lässt sich ein allgemeines Verfahren zur Konstruktion solcher Körper ableiten.

Gegenstand der vorliegenden Erfindung ist daher ein Verfahren gemäß dem unabhängigen Anspruch 1 zur Konstruktion von Körpern, die sich bei gleichsinniger Rotation mit gleicher Drehzahl um parallel zueinander angeordnete Achsen stets in mindestens einem Punkt berühren. Bevorzugte Ausführungsformen finden sich in den abhängigen Ansprüchen.

Das erfindungsgemäße Verfahren lässt sich auf zwei oder mehr Körper anwenden. Die Körper sind nebeneinander auf parallelen, paarweise in einem Abstand a verlaufenden Drehachsen angeordnet. Zweckmäßigerweise wird das Verfahren für zwei Körper K1 und K2 beschrieben, die sich mit gleicher Drehzahl um ihre jeweilige Achse drehen. Bei der Anordnung von mehr als zwei Körpern würden die Körper K1 und K2 stets abwechselnd auf benachbarten Drehachsen angeordnet werden.

Die Körper K1 und K2 werden hier der Einfachheit halber auch als korrespondierende Körper bezeichnet. Die Drehzahl ist die Zahl der Umdrehungen eines Körpers um seine Drehachse pro Zeiteinheit (Einheit Hertz).

Zur Konstruktion der korrespondierenden Körper K1 und K2 werden zunächst die Querschnittsprofile dieser Körper erzeugt. Die Querschnittsprofile sind die Profile, die sich durch einen Schnitt der Körper K1 und K2 in einer Ebene E, die senkrecht zu den Drehachsen A1 und A2 verläuft, ergeben.

Überraschend wurde gefunden, dass man das Querschnittsprofil eines Körpers vorgeben kann und sich das Querschnittsprofil des anderen, korrespondierenden Körpers aus diesem vorgegebenen Profil einfach ableiten lässt. Dabei muss das vorzugebende Profil nur wenige, einfach zu realisierende Kriterien erfüllen. Die Ableitung des Profils des korrespondierenden Körpers erfolgt auf einfache Weise entweder zeichnerisch oder rechnerisch. Dies ermöglicht die Konstruktion einer außerordentlichen Vielfalt an korrespondierenden Körpern. Dadurch ist es ferner erstmalig möglich, einen nahezu beliebigen Körper vorzugeben und den dazu korrespondierenden Körper in einfacher Weise von dem vorgegebenen abzuleiten. Das erfindungsgemäße Verfahren ist nicht auf Querschnittsprofile, die durch Kreisbögen beschrieben werden (wie im Fall von Schneckenelementen des Typs Erdmenger, siehe [1] Seiten 96 bis 98) beschränkt. Das erfindungsgemäße Verfahren ist auch nicht auf die in [2] beschriebenen mathematischen Funktionen zur Definition von Querschnittsprofilen beschränkt.

Um die Kriterien, die das vorzugebende Querschnittsprofil zu erfüllen hat, zu benennen, wird das vorzugebende Querschnittsprofil zweckmäßigerweise als mathematische Kurve beschrieben.

Eine (mathematische) Kurve ist ein eindimensionales Objekt, das eine Krümmung besitzt. Eindimensional bedeutet dabei, dass man sich auf der Kurve nur in einer Richtung (bzw. der Gegenrichtung) bewegen kann. Im vorliegenden Fall liegt die Kurve in einer zweidimensionalen Ebene E, die senkrecht zu den Drehachsen A1 und A2 verläuft. Die Schnittpunkte S1 und S2 der Drehachsen A1 und A2 mit der Ebene E werden auch als Drehpunkte der jeweiligen Achsen bezeichnet. Der Abstand der Drehpunkte S1 und S2 voneinander beträgt $a$.

Unter der Krümmung einer Kurve versteht man die Richtungsänderung pro Längeneinheit. Die Krümmung einer Geraden ist überall gleich null, weil sich ihre Richtung nicht ändert. Ein Kreis mit dem Radius r hat überall gleiche Krümmung (nämlich 1/r), denn seine Richtung ändert sich überall gleich stark. Bei allen anderen Kurven wechselt üblicherweise die Krümmung von Kurvenpunkt zu Kurvenpunkt.

Die Krümmung einer Kurve in einem Punkt P gibt also an, wie stark die Kurve in der unmittelbaren Umgebung des Punktes P von einer Geraden abweicht.

Den Kehrwert der Krümmung nennt man Krümmungsradius; dies ist der Radius des Kreises (Krümmungskreis), der in einer Umgebung des Berührpunkts die beste Näherung darstellt (siehe Lehrbücher der Mathematik, insbesondere der Geometrie).

Eine Kurve lässt sich, wie dem Fachmann bekannt ist, über eine Parameterdarstellung in Abhängigkeit von einem Parameter $s$ definieren:

$$\vec{p}(s) = \begin{pmatrix} x(s) \\ y(s) \end{pmatrix}$$

Dabei sind $x(s)$ und $y(s)$ die Koordinaten der Punkte der Kurve $\vec{p}(s)$ in der zweidimensionalen Ebene E.

Folgende Kriterien muss die Kurve, die das Querschnittsprofil eines Körpers K1 beschreibt, erfüllen, damit sich aus der Kurve ein Querschnittsprofil eines korrespondierenden Körpers K2 erzeugen lässt:

- Die Kurve muss geschlossen sein.
- Die Kurve muss stetig sein.
- Die Kurve muss konvex sein.
- Die Kurve muss abschnittsweise stetig differenzierbar sein.
- Die Kurve $\vec{p}$ muss in jedem Punkt einen Krümmungsradius ρ aufweisen, der kleiner oder gleich dem Abstand $a$ ist.

Eine geschlossene, konvexe Kurve hat bekanntlich folgende Eigenschaft: Man betrachtet zwei beliebige Punkte P1 und P2 auf der Kurve. Verbindet man diese Punkte P1 und P2 durch eine Gerade, so führt diese Gerade durch die Punkte P1 und P2 der Kurve, aber darüber hinaus durch keinen weiteren Punkt auf der Kurve, unabhängig davon, wo die Punkte P1 und P2 auf der Kurve liegen.

Für eine konvexe Kurve gilt gleichfalls, dass die Kurve in jedem Punkt eine positive Krümmung hat. Die Kurve kann einen oder mehrere Knicke aufweisen. In dem Fall, dass ein oder mehrere Knicke vorhanden sind, ist die Kurve in den Abschnitten zwischen den Knicken stetig differenzierbar (=abschnittsweise stetig differenzierbar). In dem Fall, dass keine Knicke vorhanden sind, ist die Kurve vollständig stetig differenzierbar. Eine Möglichkeit Knicke mathematisch zu beschreiben, ist weiter unten aufgeführt.

Sind die oben genannten wenigen und einfach zu realisierenden Kriterien erfüllt, dann kann aus der Kurve $\vec{p}$ eine Kurve $\vec{q}$ abgeleitet werden, die das Querschnittsprofil des korrespondierenden Körpers K2 beschreibt.

Hierzu seien noch einige Vektoren eingeführt (siehe beispielsweise "HÜTTE, das Ingenieurwissen", 32. Auflage, ISBN 3-540-20325-7, 2004, Seite A 59 ff [3]). Die verwendete Notation entspricht der mathematischen Standard-Notation: Ein Vektor ist mit einem Pfeil über dem Buchstaben gekennzeichnet, der Punkt über einem Ausdruck ist hierbei jeweils die Ableitung nach dem Parameter, Betragsstriche zeigen den Betrag eines Vektors an, also die Wurzel des Skalarproduktes mit sich selber, $|\vec{x}| = \sqrt{\vec{x} \cdot \vec{x}}$, und das Kreuz bedeutet das Spatprodukt.

Weiterhin wird der Einfachheit halber zunächst angenommen, dass die Kurve vollständig stetig differenzierbar ist, d.h. keine Knicke aufweist. In diesem Fall gelten die nachfolgend aufgeführten Beziehungen uneingeschränkt für alle Punkte des Querschnittsprofils. Im Fall von Querschnittsprofilen mit einem oder mehreren Knicken gelten die nachfolgenden Beziehungen für die stetig differenzierbaren Abschnitte zwischen den Knicken.

-

Es sei $\vec{t}(\vec{p}) = \dfrac{\dot{\vec{p}}}{|\dot{\vec{p}}|}$ eine Schar von normierten Tangentenvektoren der Länge 1.

Zu jedem Punkt der Kurve $\vec{p}$ existiert ein normierter Tangentenvektor, der in dem jeweiligen Punkt tangential zur Kurve $\vec{p}$ verläuft.

-

Es sei $\vec{n}(\vec{p}) = \dfrac{\dot{\vec{t}}}{|\dot{\vec{t}}|}$ eine Schar von normierten Normalenvektoren mit der Länge 1, die jeweils in Richtung des Mittelpunktes des zum jeweiligen Punkt der Kurve $\vec{p}$ gehörigen Krümmungskreises zeigen.

Zu jedem Punkt der Kurve $\vec{p}$ existiert ein normierter Normalenvektor, der in dem jeweiligen Punkt senkrecht auf der Tangente zur Kurve $\vec{p}$ steht. Dieser Normalenvektor weist in Richtung des Mittelpunktes desjenigen Kreises (Krümmungskreis), der für den Punkt der Kurve $\vec{p}$ die jeweilige Krümmung approximiert. Der zu einem Punkt der Kurve gehörige Krümmungskreis weist denselben Radius (dieselbe Krümmung) wie die Kurve in dem jeweiligen Punkt auf.

Dann ist $\rho = \dfrac{\dot{s}^3}{|\dot{\vec{p}} \times \ddot{\vec{p}}|}$ der Krümmungsradius, mit $\dot{s} = |\dot{\vec{p}}|$.

- Es sei $\vec{a}$ ein Vektor mit der Länge $a$, dessen Richtung vom Schnittpunkt S1 zum Schnittpunkt S2 führt.

Die Kurve $\vec{q}$, die das Querschnittsprofil des korrespondierenden Körpers K2 beschreibt, ergibt sich aus der Kurve $\vec{p}$, die das vorzugebende Querschnittsprofil des Körpers K1 beschreibt, mittels der nachstehenden Beziehung:

$$\vec{q} = \vec{p} + a \cdot \vec{n}(\vec{p}) + \vec{a} \qquad\qquad (1)$$

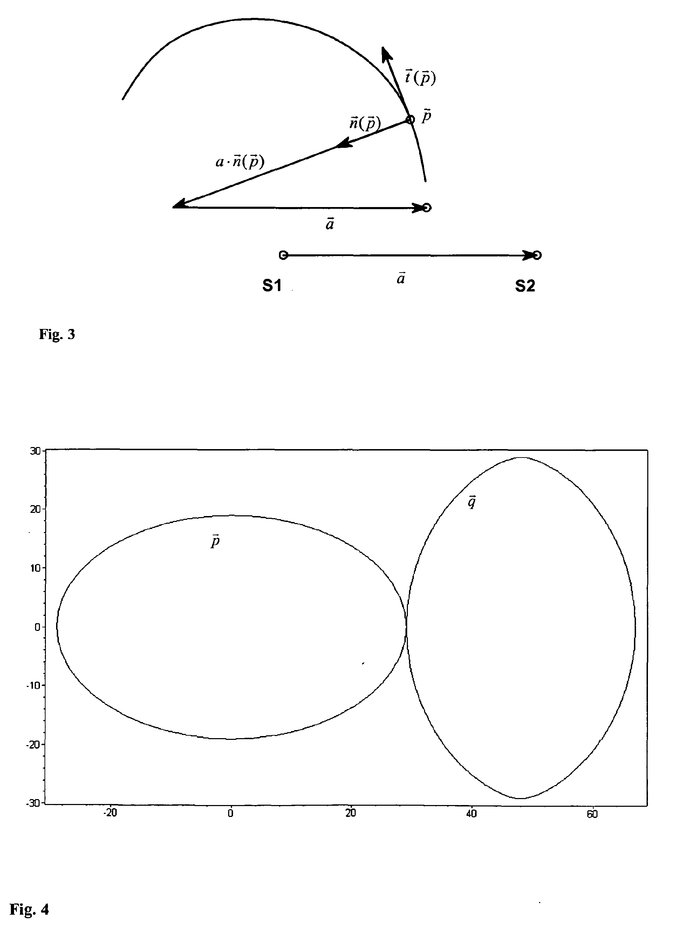

Fig. 3 zeigt schematisch die Durchführung des erfindungsgemäßen Verfahrens anhand eines Punktes an einer Kurve. Die Schnittpunkte S 1 und S2 der Drehachsen sind als kleine Kreise dargestellt. Sie weisen einen Abstand $a$ voneinander auf. Der Vektor $\vec{a}$ hat die Länge $a$ und weist von S 1 zu S2. Oberhalb der Schnittpunkte S1 und S2 ist der Ausschnitt einer Kurve $\vec{p}$ gezeigt. Ein Punkt auf der Kurve ist herausgegriffen und als kleiner Kreis gekennzeichnet. Aus diesem Punkt der Kurve $\vec{p}$ lässt sich ein Punkt auf der korrespondierenden Kurve $\vec{q}$ erzeugen. Der Punkt auf der korrespondierenden Kurve $\vec{q}$ ergibt sich, indem man im Punkt der Kurve $\vec{p}$ eine Tangente $\vec{t}(\vec{p})$ an die Kurve legt, zu dieser Tangente den normierten Normalenvektoren $\vec{n}(\vec{p})$ bildet und ihn um den Faktor a verlängert und schließlich zu diesem Vektor $a \cdot \vec{n}(\vec{p})$ den Vektor $\vec{a}$ addiert.

Die Kurve $\vec{p}$ kann durchgehend durch eine einzige mathematische Funktion beschrieben werden. Ebenso kann die Kurve $\vec{p}$ abschnittsweise durch verschiedene mathematische Funktionen beschrieben werden Die Kurve $\vec{p}$ muss abschnittsweise stetig differenzierbar sein. An den Abschnittsgrenzen einer abschnittsweise definierten Kurve $\vec{p}$ müssen die einzelnen Abschnitte somit nicht stetig differenzierbar ineinander übergehen.

Stoßen zwei Kurvenabschnitte in einem Knickpunkt aufeinander, so ist für den Knickpunkt kein Tangenten- und kein Normalenvektor definiert. Dementsprechend ergibt sich für den Knickpunkt des Profils des Körpers K1 der korrespondierende Abschnitt der Kurve $\vec{q}$ des korrespondierenden Körpers K2 nicht unmittelbar aus der Beziehung (1).

Es wurde jedoch überraschend gefunden, dass zu jedem Knick im Querschnittsprofil des Körpers K1 ein Kreisbogen im Querschnittsprofil des Körpers K2 korrespondiert. Die Größe eines Kreisbogens ist durch die Angabe seines Zentriwinkels und seines Radius gegeben. Im Folgenden wird der Zentriwinkel eines Kreisbogens kurz als der Winkel eines Kreisbogens bezeichnet. Die Position eines Kreisbogens ist durch die Position seines Mittelpunkts und durch die Position seiner beiden Endpunkte gegeben.

Ein zu einem Knick im Querschnittsprofil des Körpers K1 korrespondierender Kreisbogen im Querschnittsprofil des Körpers K2 hat stets einen Radius, dessen Größe dem Achsabstand $a$ entspricht. Ferner hat ein zu einem Knick korrespondierender Kreisbogen stets einen Winkel, der  demjenigen Winkel entspricht, in dem die Tangenten an die Kurvenabschnitte in dem Knickpunkt aufeinandertreffen.
Umgekehrt gilt entsprechend, dass ein korrespondierender Profilabschnitt der Kurve $\vec{q}$ ein "Knick" ist, wenn ein Profilabschnitt der Kurve $\vec{p}$ ein Kreisbogen mit dem Radius $a$ ist.

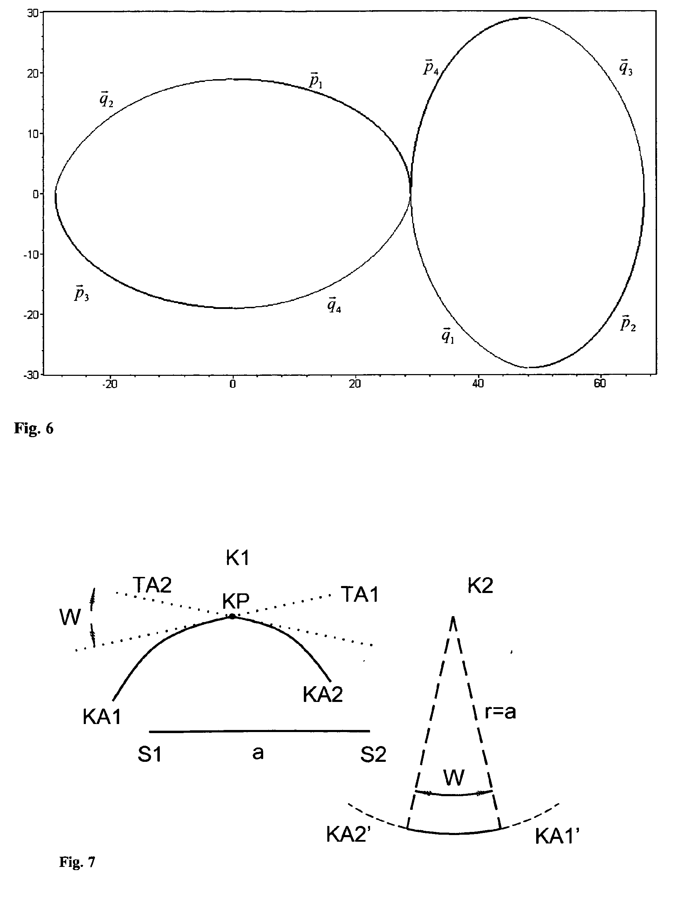

Insofern ist es vorteilhaft, einen Knick durch einen Kreisbogen zu beschreiben, dessen Radius gleich 0 ist. An einem Knick erfolgt ein Übergang eines ersten Kurvenabschnitts durch Drehung um den Winkel des Kreisbogens mit Radius Null in einen zweiten Kurvenabschnitt. Eine Tangente an den ersten Kurvenabschnitt im Mittelpunkt des Kreisbogens mit dem Radius Null schneidet eine Tangente an den zweiten Kurvenabschnitt ebenfalls im Mittelpunkt des Kreisbogens in einem Winkel, der dem Winkel des Kreisbogens entspricht. Unter Berücksichtigung des Kreisbogens gehen alle benachbarten Kurvenabschnitte (erster Kurvenabschnitt → Kreisbogen mit Radius Null → zweiter Kurvenabschnitt) tangential ineinander über. Zweckmäßigerweise wird ein Kreisbogen mit einem Radius Null wie ein Kreisbogen behandelt, dessen Radius gleich eps ist, wobei eps eine sehr kleine positive reelle Zahl ist, die gegen 0 strebt (eps<<1, eps →0).
Auf dem korrespondierenden Querschnittsprofil entsteht ein Kreisbogen mit demselben Winkel und einem Radius = Achsabstand. Figur 7 verdeutlicht den beschriebenen Sachverhalt. In Figur 7 sind ein Teil eines Querschnittsprofils des Körpers K1 und ein Teil des Querschnittsprofils des resultierenden Körpers K2 gezeigt. Der gezeigte Teil des Querschnittsprofils des Körpers K1 besteht aus den Kurvenabschnitten KA1 und KA2. Diese Kurvenabschnitte treffen in einem Knickpunkt KP (dargestellt durch einen kleinen Kreis) aufeinander, d.h. das Querschnittsprofil des Körpers K1 weist einen Knick auf. Wie oben erläutert, wird der Knick vorzugsweise durch einen Kreisbogen beschrieben, dessen Radius die Größe Null hat. Der Winkel des Kreisbogens ist gleich dem Winkel W, in dem die Tangente TA1 an den Kurvenabschnitt KA1 und die Tangente TA2 an den Kurvenabschnitt KA2 in dem Knickpunkt KP aufeinanderstoßen.
In dem Querschnittsprofil des zum Körper K1 korrespondierenden Körpers K2 ergeben sich die zu den Kurvenabschnitten KA1 und KA2 gehörigen Abschnitte KA1' und KA2' aus der Beziehung (1): $\vec{q} = \vec{p} + a \cdot \vec{n}(\vec{p}) + \vec{a}$. Dabei sind für die Kurve $\vec{p}$ in Gleichung (1) jeweils die Kurvenabschnitte KA1 und KA2 einzusetzen, so dass als Kurve $\vec{q}$ die Kurvenabschnitte KA1' und KA2' resultieren. Zwischen den resultierenden Kurvenabschnitten KA1' und KA2', die in Figur 7 als gestrichelte Linien angedeutet sind, entsteht eine Lücke.
In dem Querschnittsprofil des korrespondierenden Körpers K2 resultiert aus dem Knick in dem Querschnittsprofil des Körpers K1 ein Kreisbogen mit dem Radius r = $a$ ($a$ = Achsabstand zwischen den Drehpunkten S1 und S2) und dem Winkel W. Dieser Kreisbogen schließt die Lücke zwischen den Kurvenabschnitten KA1' und KA2'. Der Mittelpunkt des Kreisbogens ergibt sich durch Verschiebung des Knickpunkts um den Abstand a parallel zur Verbindungslinie zwischen den  Punkten S1 und S2 in Richtung des Körpers K2. Dies entspricht einer Verschiebung des Knickpunkts um den Vektor $\vec{a}$. Die Endpunkte des resultierenden Kreisbogens grenzen an die Abschnittsgrenzen der Kurvenabschnitte KA1' und KA2'. Damit ergibt sich sowohl die Größe als auch die Position des resultierenden Kreisbogens eindeutig aus den Parametern, die den Knickpunkt als Kreisbogen mit Radius Null beschreiben.

Das erfindungsgemäße Verfahren lässt sich damit wie folgt formulieren:

Gegenstand der vorliegenden Erfindung ist ein Verfahren zur Erzeugung von zwei Körpern K1 und K2, die sich bei gleichsinniger Rotation mit gleicher Drehzahl um zwei, in einem Abstand $a$ parallel zueinander angeordnete Drehachsen A1 und A2 stets in mindestens einem Punkt berühren, dadurch gekennzeichnet, dass in einer Ebene E senkrecht zu den Drehachsen ein Querschnittsprofil des Körpers K1 durch eine stetige, abschnittsweise stetig differenzierbare, geschlossene, konvexe Kurve $\vec{p}$ gebildet wird, und das Querschnittsprofil des Körpers K2 aus der Kurve $\vec{p}$ gemäß der Beziehung

$$\vec{q} = \vec{p} + a \cdot \vec{n}(\vec{p}) + \vec{a} \qquad (1)$$

gebildet wird, wobei

- die Kurve $\vec{p}$ in jedem Punkt einen Krümmungsradius $\rho$ aufweist, der kleiner oder gleich dem Abstand $a$ ist,
- für jeden Punkt der Kurve $\vec{p}$ innerhalb eines stetig differenzierbaren Abschnitts ein normierter Normalenvektor $\vec{n}(\vec{p})$ mit der Länge 1 existiert, der in dem jeweiligen Punkt senkrecht auf der Tangente zur Kurve $\vec{p}$ steht und in Richtung des Mittelpunktes des zum jeweiligen Punkt der Kurve $\vec{p}$ gehörigen Krümmungskreises zeigt,
- $\vec{a}$ ein Vektor ist, der in Richtung vom Schnittpunkt S 1 der Drehachse A1 mit der Ebene E zum Schnittpunkt S2 der Drehachse A2 mit der Ebene E führt und die Länge $a$ besitzt,
- bei einem Knick im Querschnittsprofil des Körpers K1 das Querschnittsprofil des Körpers K2 einen Kreisbogen aufweist, dessen Radius dem Achsabstand $a$ entspricht und dessen Winkel demjenigen Winkel entspricht, in dem die Tangenten an die Kurvenabschnitte der Kurve $\vec{p}$ im Knickpunkt aneinanderstoßen.

Der Schnittpunkt S1 kann innerhalb der geschlossenen Kurve $\vec{p}$ oder außerhalb liegen. Vorzugsweise liegt der Schnittpunkt S1 innerhalb der geschlossenen Kurve $\vec{p}$.

Die geschlossene Kurve $\vec{p}$ kann eine Spiegelsymmetrie, eine Punktsymmetrie oder eine Drehsymmetrie aufweisen. Sofern die geschlossene Kurve $\vec{p}$ eine Spiegelsymmetrie aufweist, liegt der Schnittpunkt S 1 vorzugsweise auf der Symmetrieachse. Sofern die geschlossene Kurve $\vec{p}$ mehr als eine Spiegelsymmetrie aufweist, liegt der Schnittpunkt S 1 bevorzugt auf dem Schnittpunkt von mindestens zwei Symmetrieachsen der Kurve $\vec{p}$. Sofern die geschlossene Kurve $\vec{p}$ eine Punktsymmetrie aufweist, liegt der Schnittpunkt S 1 bevorzugt auf dem Symmetriepunkt. Sofern die geschlossene Kurve $\vec{p}$ eine Drehsymmetrie aufweist, liegt der Schnittpunkt S 1 bevorzugt auf dem Drehpunkt des Profils.

Liegt der Schnittpunkt S 1 innerhalb oder auf der Kurve $\vec{p}$ so haben alle Punkte auf der Kurve $\vec{p}$ von dem Schnittpunkt S 1 einen maximalen Abstand von a und einen minimalen Abstand von 0.

Die Kurve $\vec{p}$ kann beispielsweise durchgehend durch eine einzige mathematische Funktion beschrieben werden. Als Beispiele seien dem Fachmann bekannte Funktionen wie Kreisfunktionen oder Ellipsenfunktionen, Parabelfunktionen oder Hyperbelfunktionen genannt. Auch ist beispielsweise möglich, Funktionen in der Form

$$\vec{p} = \left( r_0 - f(s) \right) \cdot \begin{pmatrix} \cos(s) \\ \sin(s) \end{pmatrix} + \begin{pmatrix} x_0 \\ y \end{pmatrix}$$

darzustellen, wodurch man, abhängig von der Gestalt der Funktion $f(s)$ sich bei der Ausführung von Schneckenelementen zwischen einem Gehäuse mit einem Radius $r_0$ und dem rotierenden Schneckenelement ein Spalt von frei wählbarer Gestalt ergibt. $f(s)$ kann beispielsweise eine lineare Funktion oder quadratische Funktion von s, eine Hyperbelfunktion oder eine Exponentialfunktion sein.

Weiterhin sind Funktionen, deren Werte durch Kontrollpunkte bestimmt werden, wie beispielsweise B-Spline-Funktionen, Bezier-Funktionen, rationale Bezier-Funktionen sowie nicht-uniforme rationale B-Splines (NURBS) genannt. Bezier-Funktionen, rationale Bezier-Funktionen NURBS sind bevorzugt, weil sie häufig in der Konstruktion mit CAD-Systemen (CAD = Computer Aided Design) eingesetzt werden und dienen dort vor allem dazu, beliebige Formen in geometrisch anschaulicher Form durch Verschieben von Kontrollpunkten zu defmieren.

Als Beispiel sollen hier Bezier-Funktionen angeführt werden. Bezier-Funktionen haben bekanntlich die Form

$$\vec{C}(t) = \sum_{i=0}^{n} B_{i,n}(t)\,\vec{P_i}$$

wobei $\vec{P_i}$ die Koordinaten der Kontrollpunkte und

$$B_{i,n}(t) = \binom{n}{i} t^i (1-t)^{n-i}$$

ein Bernstein-Polynom ist.

Rationale Bezier-Funktionen vom Grad n, die beispielsweise in M. S. Floater "'Derivatives of rational Bezier curves", Comp. Aid. Geom. Design 9, 1992, 161-174 [4] beschrieben werden, haben bekanntlich die Form

$$\vec{P}(t) = \frac{\sum_{i=0}^{n} B_{i,n}(t)\, w_i\, \vec{P_i}}{\sum_{i=0}^{n} B_{i,n}(t)\, \vec{P_i}}$$

wobei $\vec{P_i}$ die Koordinaten der Kontrollpunkte der Funktion und $w_i$ ihre Gewichtung darstellt.

Besonders bevorzugt sind quadratische und kubische (d.h. mit n=2 und n=3) Bezier-Funktionen und kubische rationale Bezier-Funktionen.

Die für die Durchführung des Verfahrens notwendigen Ableitungen kann sich der Fachmann durch Anwendung der allgemein bekannten Regeln der Mathematik verschaffen. Für rationale Bezier-Funktionen sind verschiedene Methoden beispielsweise in [4] angegeben. Auch ist der Einsatz eines Computeralgebrasystems für die Berechnung von Ableitungen vorteilhaft. Eine andere Möglichkeit besteht darin, die Ableitungen aus vorliegenden numerischen Daten zu approximieren, beispielsweise durch Differenzenbildung. Derartige Verfahren sind dem Fachmann bekannt und beispielsweise in Press, Teukolsky, Vetterling, Flannery: "Numerical Recipes in FORTRAN", 2nd edition, ISBN 0 521 43064 X, Seite 180 ff [5] dargestellt.

Ebenso kann die Kurve $\vec{p}$ abschnittsweise durch verschiedene mathematische Funktionen beschrieben werden, wobei die abschnittsweisen Funktionen bevorzugt den im vorherigen Absatz genannten Funktionen entsprechen.

Ein Sonderfall der abschnittsweisen Beschreibung durch mathematische Funktionen stellt die Beschreibung durch Kreisbögen dar. Es ist möglich, einen Teil oder die gesamte Kurve $\vec{p}$ und damit einen Teil oder das gesamte Querschnittsprofil des Körpers K1 durch Kreisbögen zu beschreiben. Aus der Beziehung $\vec{q} = \vec{p} + a \cdot \vec{n}(\vec{p}) + \vec{a}$ ergibt sich, dass in diesem Fall auch die Kurve $\vec{q}$ und damit das Querschnittsprofil des zum Körper K1 korrespondierenden Körpers K2 aus Kreisbögen zusammengesetzt ist.

Werden Profile nach dem erfindungsgemäßen Verfahren abschnittsweise erzeugt, so können die korrespondierenden Profilabschnitte der Körper K1 und K2 auch von Abschnitt zu Abschnitt wechseln. In diesem Fall wird nach Vorgabe eines Abschnittes von $\vec{p}_n$ und Ermittlung des korrespondierenden Abschnittes von $\vec{q}_n$ ein Kurvenabschnitt $\vec{p}_{n+1}$ vorgegeben, der in $\vec{q}_n$ tangential übergeht und nach der Beziehung (1) mit vertauschtem S1 und S2 (d.h. Ersetzen von $\vec{a}$ durch $-\vec{a}$) einen Kurvenabschnitt $\vec{q}_{n+1}$ ergibt, der tangential in den vorherigen Kurvenabschnitt $\vec{p}_n$ übergeht.

Das erfindungsgemäße Verfahren lässt sich überraschenderweise allein mit Winkellineal und Zirkel auf Papier ausführen.

Damit ist es prinzipiell sogar möglich, das Querschnittsprofil eines Körpers nur mit der Hand zu erzeugen und das Querschnittsprofil des korrespondierenden Körpers aus dem zeichnerisch vorgegebenen Profil zeichnerisch abzuleiten. Hierzu werden zweckmäßigerweise zunächst die Drehpunkte S 1 und S2 in eine Ebene gelegt. Der Abstand zwischen den Drehpunkten beträgt a. Das Querschnittsprofil des Körpers K1 wird in die Ebene der Punkte S1 und S2 ganz oder vollständig eingezeichnet. Dabei gelten die oben aufgeführten Kriterien zur Erzeugung des Profils des Körpers K1.

Jeder einzelne Punkt des Querschnittsprofils eines korrespondierenden Körpers K2 lässt sich aus den einzelnen Punkten des vorgegebenen Querschnittsprofils eines Körpers K1 ableiten.

Die Querschnittsprofile korrespondierender Körper können auf verschiedene Weisen in die dritte Dimension fortgesetzt werden, um Körper zu erzeugen, die sich bei gleichsinniger Rotation mit gleicher Drehzahl um parallel zueinander angeordnete Achsen stets in mindestens einem Punkt berühren. Dies sei beispielhaft anhand von Schneckenelementen für Schneckenextruder erläutert, denn das erfindungsgemäße Verfahren wird vorzugsweise für die Erzeugung von Schneckenelementen eingesetzt.

Das erfindungsgemäße Verfahren ist jedoch nicht auf Schneckenelemente aus der heutzutage üblichen Modulbauweise einer Schnecke aus Schneckenelementen und Kernwellen beschränkt, sondern auch auf Schnecken in Massivbauweise anwendbar. Daher sind unter dem Begriff Schneckenelemente auch Schnecken in Massivbauweise zu verstehen.

Schneckenelemente können z.B. als Förder-, Knet- oder Mischelemente ausgeführt sein.

Ein Förderelement zeichnet sich dadurch aus (siehe zum Beispiel [1], Seiten 227 - 248), dass das Schneckenprofil in Achsrichtung kontinuierlich schraubenförmig verdreht fortgesetzt wird. Dabei kann das Förderelement rechts- oder linksgängig sein. Die Steigung des Förderelements liegt bevorzugt im Bereich des 0,1-fachen bis 10-fachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Achsabstands. Die Gängigkeit, die Steigung und die axiale Länge sind bei benachbarten Schneckenelementen (korrespondierenden Körpern) gleich.

Ein Knetelement zeichnet sich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Achsabstandes. Die Gängigkeit und die axiale Länge der Knetscheiben sind bei benachbarten Schneckenelementen (korrespondierenden Körpern) gleich.

Mischelemente werden dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet sind. Die Gängigkeit, die Steigung und die axiale Länge sind bei benachbarten Schneckenelementen (korrespondierenden Körpern) gleich.

Um den Übergang zwischen verschiedenen Schneckenelementen zu ermöglichen, werden häufig Unterlegscheiben als Distanzhülse eingesetzt. In Sonderfällen werden sogenannte Übergangselemente eingesetzt, die einen kontinuierlichen Übergang zwischen zwei Schneckenprofilen unterschiedlicher Gangzahl ermöglichen, wobei an jedem Punkt des Übergangs ein sich selbst reinigendes Paar von Schneckenprofilen vorliegt. Übergangselemente können rechts- oder linksgängig sein. Ihre Steigung liegt bevorzugt im Bereich des 0,1-fachen bis 10-fachen des Achsabstands und ihre axiale Länge liegt bevorzugt im Bereich des 0,1-fachen bis 10-fachen des Achsabstandes. Die Gängigkeit, die Steigung und die axiale Länge sind bei benachbarten Schneckenelementen (korrespondierenden Körpern) gleich.

Die vorliegende Erfindung erlaubt die Erzeugung von Profilen korrespondierender Körper *ab initio*. Im Gegensatz zum Stand der Technik geht das erfindungsgemäße Verfahren nicht von bestehenden Profilen aus, sondern erlaubt die Erzeugung beliebiger Profile Schritt für Schritt unter Beachtung einfacher Regeln. Das erfindungsgemäße Verfahren ist allgemeingültig, d.h. es nicht auf bestimmte Typen von Körpern (z.B. Schneckenelemente vom Typ Erdmenger) beschränkt.

Das erfindungsgemäße Verfahren lässt sich wie bereits ausgeführt allein mit Winkellineal und Zirkel auf Papier ausführen. Die Durchführung des erfindungsgemäßen Verfahrens auf einem Computersystem ist vorteilhaft, da die Koordinaten und Abmessungen der Profile in einer Form vorliegen, die von einem Computer weiter verarbeitet werden können.

Bevorzugt weist das Computersystem eine grafische Benutzeroberfläche (GUI) auf, die es einem Benutzer auf einfache Weise erlaubt, die frei wählbaren Größen zur Erzeugung von Profilen über Eingabegeräte, wie z.B. Maus und / oder Tastatur einzugeben. Besonders bevorzugt weist das Computersystem eine Möglichkeit auf, Konturen von Profilen mit Hilfe von Kontrollpunkten und ggf. Wichtungen bei Funktionen, deren Werte durch Kontrollpunkte definiert werden, Funktionen, deren Werte durch Kontrollpunkte bestimmt werden, wie beispielsweise B-Spline-Funktionen, Bezier-Funktionen, rationale Bezier-Funktionen sowie nicht-uniforme rationale B-Splines (NURBS) anzugeben, wobei dies in Form von Zahlen (Koordinaten), graphisch oder mit einer Kombination aus grafischer und zahlenmäßiger Eingabe erfolgen kann. Weiterhin weist das Computersystem bevorzugt eine grafische Ausgabe auf, mittels derer die berechneten Profile auf einem grafischen Ausgabegerät wie z.B. Bildschirm und / oder Drucker visualisiert werden können. Bevorzugt weist das Computersystem die Möglichkeit auf, berechnete Profile zu exportieren, d.h. in Form von speicherbaren Datensätzen, welche die geometrischen Maße der berechneten Körper umfassen, für weitere Verwendungszwecke entweder auf einem Datenträger zu speichern oder an ein angeschlossenes Gerät zu übertragen. Das Computersystem ist vorzugsweise so gestaltet, dass es sowohl Querschnittsprofile als auch aus den Querschnittsprofilen generierte Körper berechnen und die berechneten Geometrien in einem Format ausgeben kann, das von einer Maschine zur Herstellung solcher Körper z.B. einer Werkzeugmaschine, beispielsweise einer Fräsmaschine verwendet werden kann, um reale Körper herzustellen. Solche Formate sind dem Fachmann bekannt.

Nachdem die dreidimensionalen Profile auf die beschriebene Weise erzeugt worden sind, können die Körper z.B. mit einer Fräsmaschine, einer Drehmaschine oder einer Wirbelmaschine erzeugt werden. Bevorzugte Materialien zur Erzeugung solcher Körper sind Stähle, insbesondere Nitrierstähle, Chrom-, Werkzeug- und Edelstähle, pulvermetallurgisch hergestellte metallische Verbundwerkstoffe auf Basis von Eisen, Nickel oder Kobalt, ingenieurkeramische Werkstoffe wie z.B. Zirkonoxid oder Siliziumcarbid, falls es sich bei den Körpern um Extruderschnecken handelt.

Schneckenelemente für Doppelschnecken- oder Mehrwellenextruder sind üblicherweise in ein Gehäuse eingebracht. Dabei sind Schneckenelemente und Gehäuse so ausgeführt, dass durch die Rotation der Schneckenelemente nicht nur eine paarweise Abschabung benachbarter Schneckenelemente erfolgt, sondern auch eine Abreinigung der Gehäuseinnenwandungen durch die Rotation der Schneckenelemente gegeben ist.

Wie beispielsweise in der Veröffentlichung [1] auf den Seiten 27 bis 30 ausgeführt, weisen Anordnungen aus Schneckenelementen und Gehäuse in der Praxis stets so genannte Spiele auf. Die Spiele können, wie dem Fachmann bekannt ist, zwischen Schnecke und Gehäuse und zwischen Schnecke und Schnecke unterschiedlich groß oder gleich sein. Das Spiel zwischen Schnecke und Gehäuse wird als $\delta$ bezeichnet, das Spiel zwischen Schnecke und Schnecke als $s$. Die Spiele können auch konstant oder, in den angegebenen Grenzen, variabel sein. Es ist auch möglich, innerhalb der Spiele ein Schneckenprofil zu verschieben.

Damit weisen die in der Praxis eingesetzten Schneckenelemente aufgrund der vorliegenden Spiele streng genommen nicht die Eigenschaft auf, dass sie sich bei gleichsinniger Rotation mit gleicher Drehzahl um parallel angeordnete Achsen in mindestens einem Punkt berühren.

Dennoch geht man zur Erzeugung von Schneckenelementen in der Praxis üblicherweise von den exakt abschabenden Konturen (Profilen) aus und führt dann Spiele ein. Erfindungsgemäß werden demnach zunächst Körper (Schneckenelemente) vorzugsweise virtuell erzeugt, die sich bei gleichsinniger Rotation mit gleicher Drehzahl um parallel angeordnete Achsen in mindestens einem Punkt berühren. Ausgehend von diesen vorzugsweise virtuellen Geometrien werden Spiele vorgesehen, die verhindern, dass die in der Praxis eingesetzten Schneckenelemente "fressen". Dem Fachmann sind Methoden bekannt, um ausgehend von einem vorgegebenen, exakt abschabenden Schneckenprofil, ein Schneckenprofil mit Spielen abzuleiten. Bekannte Methoden hierfür sind beispielsweise die in [1] auf den Seiten 28ff beschriebene Möglichkeit der Achsabstand-Vergrößerung, der Längsschnitt-Äquidistanten und der Raumäquidistanten. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Drehachse des jeweiligen Elementes) um das halbe Spiel Schnecke-Schnecke senkrecht zur Profilkurve nach innen, in Richtung zur Drehachse hin, verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert.

Auch eine exzentrische Positionierung von Schneckenelementen in einem Gehäuse unter Beibehaltung der Gehäuse- und paarweisen Abschabung ist dem Fachmann der Extrudertechnik bekannt (siehe z.B. [1] Seiten 108, 246 und 249).

Die Verwendung von Gehäusen, Spielen und/oder exzentrischer Positionierung ist auf korrespondierende Körper, die sich bei der gleichsinnigen Rotation um zwei parallel angeordnete Achsen in der Weise streifen, dass sie sich stets in mindestens einem Punkt berühren, in entsprechender Weise anwendbar.

Ein weiterer Gegenstand der vorliegenden Erfindung ist damit ein Verfahren zur Erzeugung von Schneckenelementen. Das erfindungsgemäße Verfahren zur Erzeugung von Schneckenelementen ist dadurch gekennzeichnet, dass in einem ersten Schritt die Querschnittsprofile von Körpern, die sich bei gleichsinniger Rotation mit gleicher Drehzahl um in einem Abstand a parallel zueinander angeordnete Drehachsen stets in mindestens einem Punkt berühren, nach dem oben beschriebenen Verfahren erzeugt werden. In einem zweiten Schritt werden Spiele beispielsweise nach der Methode der Achsabstand-Vergrößerung, der Längsschnitt-Äquidistanten und/oder der Raumäquidistanten eingeführt. Das Spiel zwischen den Schneckenelementen liegt vorzugsweise im Bereich des 0,002-fachen bis 0,1-fachen des Achsabstandes und das Spiel zwischen Schnecke und Gehäuse liegt vorzugsweise im Bereich des 0,002-fachen bis 0,1-fachen des Achsabstandes.

Die Erfindung wird nachstehend anhand von Beispielen näher erläutert, ohne sie jedoch hierauf zu beschränken. In den folgenden Beispielen werden keine Einheiten sondern für Längen ausschließlich dimensionslose Größen (Zahlen) verwendet. Bei der technischen Ausführung können diese Zahlen in einem beliebigen Maßstab in eine technische Ausführung übertragen werden.

**Beispiel 1:**

Gegeben sei ein elliptisches Profil mit der Parameterdarstellung

$$\vec{p}(s) = \begin{pmatrix} 29\cos(s) \\ 19\sin(s) \end{pmatrix}, \quad s \in [0..2\pi[$$

Der Achsabstand betrage 48, der Drehpunkt des elliptischen Profils liege im Koordinatenursprung und der Drehpunkt des zweiten Profils bei $\begin{pmatrix} 48 \\ 0 \end{pmatrix}$.

Der Kurvenradius ist

$$\rho = \frac{1}{551}\left(-480\cos^2 s + 841\right)^{\frac{3}{2}}$$

Der maximale Wert des Kurvenradius beträgt etwa 44.26, ist also kleiner als der Achsabstand. Damit ist das Profil zulässig.
Der Normalenvektor ist dann

$$\vec{n}(s) = \begin{pmatrix} -\dfrac{19\cos s}{\sqrt{841 - 480\cos^2 s}} \\ -\dfrac{29\sin s}{\sqrt{841 - 480\cos^2 s}} \end{pmatrix}$$

Die Kontur des erzeugten Schneckenprofils ist dann

$$\vec{q}(s) = \begin{pmatrix} \dfrac{\cos s\left(-912 + 29\sqrt{841 - 480\cos^2 s}\right)}{\sqrt{841 - 480\cos^2 s}} + 48 \\ -\dfrac{\sin s\left(-1392 + 19\sqrt{841 - 480\cos^2 s}\right)}{\sqrt{841 - 480\cos^2 s}} \end{pmatrix}$$

Figur 4 zeigt die beiden Konturen, die erzeugende Ellipse links und die erzeugte Kontur rechts.

**Beispiel 2:**

Ein Abschnitt einer erzeugenden Schneckenkontur $\vec{p}$ sei durch eine kubische Bézier-Kurve mit den Kontrollpunkten

$$P_0 = \begin{pmatrix} 1 \\ 3.6 \end{pmatrix}, \ P_1 = \begin{pmatrix} 2.8 \\ 3 \end{pmatrix}, \ P_2 = \begin{pmatrix} 3.8 \\ 0.6 \end{pmatrix}, \ P_3 = \begin{pmatrix} 3.6 \\ -0.8 \end{pmatrix}$$

dargestellt. Der Achsabstand betrage 10, der Drehpunkt des erzeugenden Profils sei im Koordinatenursprung und der Drehpunkt des erzeugten Profils sei bei $\begin{pmatrix} 10 \\ 0 \end{pmatrix}$. Die Kurve hat die Koordinatenursprung und der Drehpunkt des erzeugten

Profils sei bei $\begin{pmatrix} 10 \\ 0 \end{pmatrix}$ .Die Kurve hat die Parameterdarstellung

$$\vec{p}(s) = \begin{pmatrix} 1 + 5.4\,s - 2.4\,s^2 - s^3 \\ 3.6 - 1.8\,s - 5.4\,s^2 + 2.8s^3 \end{pmatrix} \quad s \in [0..1]$$

Der Krümmungsradius hat ein Maximum von etwa 3,87 für t=0.445, was weniger als der Achsabstand von 10 ist, daher ist diese Kurve zulässig.

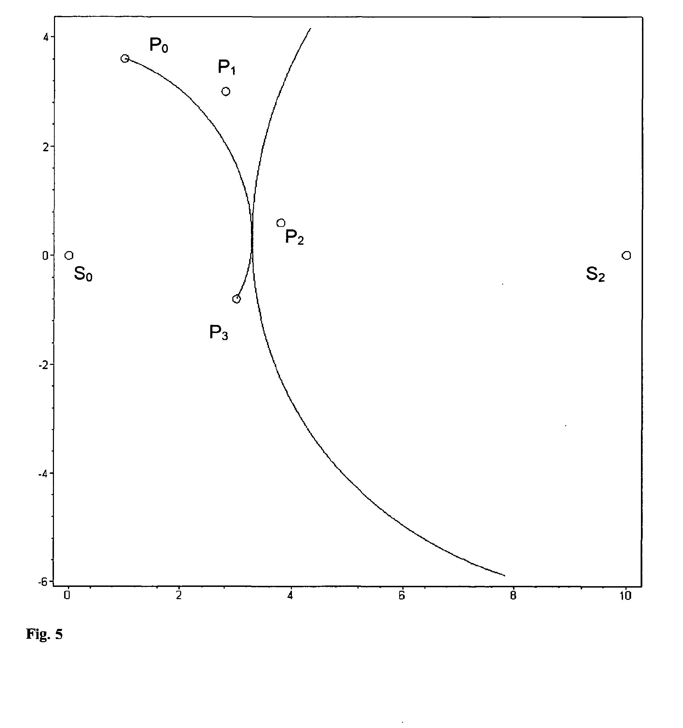

Fig. 5 zeigt die erfindungsgemäße Kurve. Die Punkte $S_1$ und $S_2$ ,angedeutet durch Kreise, sind die Drehpunkte der Querschnittsprofile der korrespondierenden Körper. Die Kontrollpunkte P0 bis P4 sind ebenfalls durch Kreise eingezeichnet. Weiterhin zeigt die Figur die Kontur $\vec{p}$ und die dazu korrespondierende Kontur $\vec{q}$.

**Beispiel 3:**

Gegeben sei ein Teil eines elliptischen Profils als erzeugendes Profil mit der Parameterdarstellung

$$\vec{p}_1(s) = \begin{pmatrix} 29\cos(s) \\ 19\sin(s) \end{pmatrix}, \quad s \in \left[0..\frac{\pi}{2}\right[$$

Dieses Profil entspricht einem Teil des Profils aus Beispiel 1. Der Achsabstand ist ebenfalls wie in Beispiel 1. Entsprechend ist dann

$$\vec{q}_1(s) = \begin{pmatrix} \dfrac{\cos s\left(-912 + 29\sqrt{841 - 480\cos^2 s}\right)}{\sqrt{841 - 480\cos^2 s}} + 48 \\[3ex] -\dfrac{\sin s\left(-1392 + 19\sqrt{841 - 480\cos^2 s}\right)}{\sqrt{841 - 480\cos^2 s}} \end{pmatrix}, \quad s \in \left[0..\frac{\pi}{2}\right[$$

Anschließend an $\vec{q}_1$ wird $\vec{p}_1$ als Teil einer Ellipse definiert zu

$$\vec{p}_2(s) = \begin{pmatrix} 19\sin(s) + 48 \\ 29\cos(s) \end{pmatrix}, \quad s \in \left[\frac{\pi}{2}..\pi\right[,$$

wobei der Drehpunkt des erzeugenden Profils $\begin{pmatrix} 48 \\ 0 \end{pmatrix}$ und des erzeugten Profils auf den Koordinatenursprung gelegt wird. Dann ergibt sich

$$\vec{q}_2(s) = \left( \begin{array}{c} \dfrac{\sin s \left(-1392 + 19\sqrt{841 - 480\cos^2 s}\right)}{\sqrt{841 - 480\cos^2 s}} \\[3mm] \dfrac{\cos s \left(-912 + 29\sqrt{841 - 480\cos^2 s}\right)}{\sqrt{841 - 480\cos^2 s}} \end{array} \right), \quad s \in \left[ \dfrac{\pi}{2} .. \pi \right[$$

Entsprechend ergibt sich bei abermaligen Wechsel der des erzeugenden und erzeugten Profils

$$\vec{p}_3(s) = \left( \begin{array}{c} 29\cos(s) \\ 19\sin(s) \end{array} \right), \quad s \in \left[ \pi .. \dfrac{3}{2}\pi \right[$$

$$\vec{q}_3(s) = \left( \begin{array}{c} \dfrac{\cos s \left(-912 + 29\sqrt{841 - 480\cos^2 s}\right)}{\sqrt{841 - 480\cos^2 s}} + 48 \\[3mm] -\dfrac{\sin s \left(-1392 + 19\sqrt{841 - 480\cos^2 s}\right)}{\sqrt{841 - 480\cos^2 s}} \end{array} \right), \quad s \in \left[ \pi .. \dfrac{3}{2}\pi \right[$$

und durch abermaligen Wechsel des erzeugenden und erzeugten Profils

$$\vec{p}_4(s) = \left( \begin{array}{c} 19\sin(s) + 48 \\ 29\cos(s) \end{array} \right), \quad s \in \left[ \dfrac{3}{2}\pi .. 2\pi \right[$$

$$\vec{q}_4(s) = \left( \begin{array}{c} \dfrac{\sin s \left(-1392 + 19\sqrt{841 - 480\cos^2 s}\right)}{\sqrt{841 - 480\cos^2 s}} \\[3mm] \dfrac{\cos s \left(-912 + 29\sqrt{841 - 480\cos^2 s}\right)}{\sqrt{841 - 480\cos^2 s}} \end{array} \right), \quad s \in \left[ \dfrac{3}{2}\pi .. 2\pi \right[$$

Die dadurch entstehende gesamte Schneckenkontur ist in Figur 6 dargestellt.

**Patentansprüche**

1. Verfahren zur Erzeugung von zwei Körpern K1 und K2, die sich bei gleichsinniger Rotation mit gleicher Drehzahl um zwei, in einem Abstand *a* parallel zueinander angeordnete Drehachsen A1 und A2 stets in mindestens einem Punkt berühren, **und** in einer Ebene E senkrecht zu den Drehachsen ein Querschnittsprofil des Körpers K1 durch eine stetige, abschnittsweise stetig differenzierbare, geschlossene, konvexe Kurve $\vec{p}$ gebildet wird, wobei das Querschnittsprofil des Körpers K2 aus der Kurve $\vec{p}$ gemäß der Beziehung

$$\vec{q} = \vec{p} + a \cdot \vec{n}(\vec{p}) + \vec{a} \qquad\qquad (1)$$

gebildet wird, wobei

- die Kurve $\vec{p}$ in jedem Punkt einen Krümmungsradius $\rho$ aufweist, der kleiner oder gleich dem Abstand $a$ ist,
- für jeden Punkt der Kurve $\vec{p}$ innerhalb eines stetig differenzierbaren Abschnitts ein normierter Normalenvektor $\vec{n}(\vec{p})$ mit der Länge 1 existiert, der in dem jeweiligen Punkt senkrecht auf der Tangente zur Kurve $\vec{p}$ steht und in Richtung des Mittelpunktes des zum jeweiligen Punkt der Kurve $\vec{p}$ gehörigen Krümmungskreises zeigt,
- $\vec{p}$ ein Vektor ist, der in Richtung vom Schnittpunkt S1 der Drehachse A1 mit der Ebene E zum Schnittpunkt S2 der Drehachse A2 mit der Ebene E führt und die Länge $a$ besitzt, und
- bei einem Knick im Querschnittsprofil des Körpers K1 das Querschnittsprofil des Körpers K2 einen Kreisbogen aufweist, dessen Radius dem Achsabstand a entspricht und dessen Winkel demjenigen Winkel entspricht, in dem die Tangenten an die Kurvenabschnitte der Kurve $\vec{p}$ im Knickpunkt aneinanderstoßen.

2. Verfahren nach Anspruch 1, **dadurch gekennzeichnet, dass** der Punkt S1 außerhalb der Kurve $\vec{p}$ liegt.

3. Verfahren nach Anspruch 1, **dadurch gekennzeichnet, dass** der Punkt S1 auf oder innerhalb der Kurve $\vec{p}$ liegt.

4. Verfahren nach Anspruch 3, **dadurch gekennzeichnet, dass** der Schnittpunkt S1 auf dem Schnittpunkt von mindestens zwei Symmetrieachsen der Kurve $\vec{p}$ liegt oder der Schnittpunkt S1 im Symmetriezentrum der Kurve $\vec{p}$ liegt oder der Schnittpunkt S1 auf dem Drehpunkt der Kurve $\vec{p}$ liegt.

5. Verfahren nach einem der Ansprüche 1 bis 4, **dadurch gekennzeichnet, dass** die Kurve $\vec{p}$ durch eine einzige mathematische Funktion beschrieben wird.

6. Verfahren nach einem der Ansprüche 1 bis 5, **dadurch gekennzeichnet, dass** die Kurve $\vec{p}$ abschnittsweise durch verschiedene mathematische Funktionen beschrieben wird.

7. Verfahren nach einem der Ansprüche 5 oder 6, **dadurch gekennzeichnet, dass** als mathematische Funktion mindestens eine ausgewählt wird aus der Reihe: B-Spline-Funktion, Bezier-Funktion, rationale Bezier-Funktion, nicht-uniforme rationale B-Spline-Funktion.

8. Verfahren nach einem der Ansprüche 1 bis 7, **dadurch gekennzeichnet, dass** die Kurve $\vec{p}$ einen oder mehrere Knicke aufweist.

9. Verfahren nach Anspruch 8, **dadurch gekennzeichnet, dass** die Kurve $\vec{p}$ an den Knickstellen durch einen Kreisbogen mit Radius eps beschrieben wird, der in die beiden angrenzenden Kurven tangential übergeht, wobei eps eine sehr kleine positive reelle Zahl ist, die gegen 0 strebt (eps<<1, eps →0).

10. Verfahren nach einem der Ansprüche 1 bis 9, **dadurch gekennzeichnet, dass** die Körper K 1 und K2 Schneckenelemente sind.

11. Verfahren nach einem der Ansprüche 1 bis 9, **dadurch gekennzeichnet, dass** die Querschnittsprofile in Achsrichtung schraubenförmig fortgesetzt werden, wobei die derart erzeugten Körper rechts- oder linksgängig sind und die auf den Achsabstand normierte Steigung im Bereich 0,1 bis 10 liegt und die auf den Achsabstand normierte Länge der Elemente im Bereich 0,1 bis 10 liegt.

12. Verfahren nach einem der Ansprüche 1 bis 10, **dadurch gekennzeichnet, dass** die Querschnittsprofile in Achsrichtung abschnittsweise linear fortgesetzt werden und die auf den Achsabstand normierte Länge der Elemente im Bereich 0,05 bis 10 liegt.

13. Verfahren zur Erzeugung von Schneckenelementen, **dadurch gekennzeichnet, dass** in einem ersten Schritt die Querschnittsprofile von Körpern, die sich bei gleichsinniger Rotation mit gleicher Drehzahl um in einem Abstand a parallel zueinander angeordnete Drehachsen stets in mindestens einem Punkt berühren, nach einem Verfahren gemäß einem der Ansprüche 1 bis 12 erzeugt werden und in einem zweiten Schritt Spiele eingeführt werden.

**Claims**

1. Method for generating two bodies K1 and K2 which, while rotating codirectionally at the same rotational speed about two axes of rotation A1 and A2 arranged parallel to one another at a distance $a$, constantly touch one another at at least one point, and in a cross-sectional profile of the body K1 is formed in a plane E perpendicular to the axes of rotation by a constant, segmentally constantly differentiable, closed convex curve $\vec{p}$, the cross-sectional profile of the body K2 being formed from the curve $\vec{p}$ according to the relation

$$\vec{q} = \vec{p} + a \cdot \vec{n}(\vec{p}) + \vec{a}$$

```
(1),
```

- the curve $\vec{p}$ having at any point a radius of curvature $\rho$ which is smaller than or equal to the distance a,
- for each point of the curve $\vec{p}$ within a constantly differentiable segment there being a standardized normal vector $\overrightarrow{n(p)}$ of length 1 which at the respective point is perpendicular to the tangent to the curve $\vec{p}$ and points in the direction of the centre of the circle of curvature belonging to the respective point of the curve $\vec{p}$,
- $\vec{a}$ being a vector which leads in the direction from the intersection point S1 of the axis of rotation A1 with the plane E to the intersection point S2 of the axis of rotation A2 with the plane E and possesses the length $a$, and
- in the case of a kink in the cross-sectional profile of the body K1, the cross-sectional profile of the body K2 having an arc of a circle, the radius of which corresponds to the axial distance a and the angle of which corresponds to that angle at which the tangents to the curve segments of the curve $\vec{p}$ butt one on the other at the kink point.

2. Method according to Claim 1, **characterized in that** the point S1 lies outside the curve $\vec{p}$.

3. Method according to Claim 1, **characterized in that** the point S1 lies on or inside the curve $\vec{p}$.

4. Method according to Claim 3, **characterized in that** the intersection point S1 lies on the intersection point of at least two axes of symmetry of the curve $\vec{p}$ or the intersection point S1 lies at the centre of symmetry of the curve $\vec{p}$ or the intersection point S1 lies on the centre of rotation of the curve $\vec{p}$.

5. Method according to one of Claims 1 to 4, **characterized in that** the curve $\vec{p}$ is described by a single mathematical function.

6. Method according to one of Claims 1 to 5, **characterized in that** the curve $\vec{p}$ is described segmentally by various mathematical functions.

7. Method according to either one of Claims 5 and 6, **characterized in that** at least one of the series: B-spline function, Bézier function, rational Bézier function, non-uniform rational B-spline function, is selected as a mathematical function.

8. Method according to one of Claims 1 to 7, **characterized in that** the curve $\vec{p}$ has one or more kinks.

9. Method according to Claim 8, **characterized in that** the curve $\vec{p}$ is described at the kink points by an arc of a circle with radius eps which merges tangentially into the two adjacent curves, eps being a very small positive real number which tends towards 0 (eps<<1, eps $\rightarrow$0).

10. Method according to one of Claims 1 to 9, **characterized in that** the bodies K1 and K2 are screw elements.

11. Method according to one of Claims 1 to 9, **characterized in that** the cross-sectional profiles are continued helically in the axial direction, the bodies generated in this way being right-handed or left-handed, and the pitch standardized to the axial distance lying the range of 0.1 to 10, and the lengths, standardized to the axial distance, of the elements lying in the range of 0.1 to 10.

12. Method according to one of Claims 1 to 10, **characterized in that** the cross-sectional profiles are segmentally continued linearly in the axial direction, and the length, standardized to the axial distance, of the elements lies in the range of 0.05 to 10.

**13.** Method for generating screw elements, **characterized in that**, in a first step, the cross-sectional profiles of bodies which, while rotating codirectionally at the same rotational speed about axes of rotation arranged parallel to one another at a distance *a*, constantly touch one another at at least one point are generated by a method according to one of Claims 1 to 12 and, in a second step, plays are introduced.

## Revendications

**1.** Procédé de formation de deux corps K1 et K2 qui se touchent toujours en au moins un point lorsqu'ils tournent dans le même sens à la même vitesse de rotation autour de deux axes de rotation A1 et A2 parallèles l'un à l'autre et écartés d'une distance **a**,

le profil de la section transversale du corps K1 dans un plan E perpendiculaire aux axes de rotation étant formé par une courbe convexe fermée constante *p* différentiable par parties de manière continue,

le profil de la section transversale du corps K2 étant formé à partir de la courbe *p* selon l'équation :

$$q = p + \mathbf{a}.n(p) + a \qquad\qquad (1)$$

la courbe *p* présentant en chaque point un rayon de courbure $\rho$ plus petit ou égal à la distance **a**,

pour chaque point de la courbe *p* dans une partie différentiable de manière continue, il existe un vecteur normal normé *n(p)* de longueur 1, perpendiculaire à la tangente à la courbe *p* en chaque point et orienté dans la direction du centre du cercle de courbure qui appartient à chaque point de la courbe *p*,

*a* est un vecteur orienté dans la direction qui va du point de concours S1 de l'axe de rotation A1 avec le plan E et le point de concours S2 de l'axe de rotation A2 avec le plan E et qui possède la longueur **a** et

en un coude du profil de la section transversale du corps K1, le profil de la section transversale du corps K2 présente un arc de cercle dont le rayon correspond à la distance **a** entre les axes et dont l'angle correspond à l'angle auquel les tangentes aux parties de la courbe *p* concoure au point de coudage.

**2.** Procédé selon la revendication 1, **caractérisé en ce que** le point S1 est situé à l'extérieur de la courbe *p*.

**3.** Procédé selon la revendication 1, **caractérisé en ce que** le point S1 est situé sur la courbe *p* ou à l'intérieur de celle-ci.

**4.** Procédé selon la revendication 3, **caractérisé en ce que** le point de concours S1 est situé sur le point de concours d'au moins deux axes de symétrie de la courbe *p* ou **en ce que** le point de concours S1 est situé au centre de symétrie de la courbe *p* ou le point de concours S1 est situé sur le centre de rotation de la courbe *p*.

**5.** Procédé selon l'une des revendications 1 à 4, **caractérisé en ce que** la courbe *p* est décrite par une unique fonction mathématique.

**6.** Procédé selon l'une des revendications 1 à 5, **caractérisé en ce que** différentes parties de la courbe *p* sont décrites par différentes fonctions mathématiques.

**7.** Procédé selon l'une des revendications 5 ou 6, **caractérisé en ce que** la ou les fonctions mathématiques sont sélectionnées dans l'ensemble constitué de la fonction B-Spline, de la fonction de Bézier, de la fonction rationnelle de Bézier et de la fonction B-Spline rationnelle non uniforme.

**8.** Procédé selon l'une des revendications 1 à 7, **caractérisé en ce que** la courbe *p* présente un ou plusieurs coudes.

**9.** Procédé selon la revendication 8, **caractérisé en ce qu'**aux points de coudage, la courbe *p* est décrite par un arc de cercle de rayon eps qui se prolonge tangentiellement en les deux courbes adjacentes, eps étant un nombre réel positif très petit qui tend vers 0 (eps<<1, eps→0).

**10.** Procédé selon l'une des revendications 1 à 9, **caractérisé en ce que** les corps K1 et K2 sont des éléments de vis.

**11.** Procédé selon l'une des revendications 1 à 9, **caractérisé en ce que** les profils de section transversale se prolongent en hélice dans la direction axiale, les corps ainsi formés ayant un pas droit ou un pas gauche, la pente normée par rapport à la distance entre les axes étant comprise entre 0,1 et 10 et la longueur des éléments normée par rapport à la distance entre les axes est comprise dans la plage de 0,1 à 10.

**12.** Procédé selon l'une des revendications 1 à 10, **caractérisé en ce que** les profils de section transversale sont prolongés linéairement par parties dans la direction axiale et **en ce que** la longueur des éléments normée par rapport à la distance entre les axes est comprise dans la plage de 0,05 à 10.

**13.** Procédé de formation d'éléments de vis, **caractérisé en ce que** dans une première étape, les profils de la section transversale de corps qui se touchent toujours en au moins un point en tournant dans le même sens à même vitesse de rotation autour d'axes de rotation parallèles l'un à l'autre et écartés d'une distance **a** sont formés par recours à un procédé selon l'une des revendications 1 à 12 et **en ce que** des jeux sont introduits dans une deuxième étape.

**Fig. 1**

**Fig. 2**

**Fig. 3**

**Fig. 4**

Fig. 5

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3900187 A
- WO 2004009326 A1
- EP 1093905 A2

**In der Beschreibung aufgeführte Nicht-Patentliteratur**

- **K. KOHLGRÜBER.** Der gleichläufige Doppelsch-neckenextruder. Hanser Verlag, 2007
- **BOOY.** Geometry of fully wiped twin-screw equipment. *Polymer Engineering and Science,* 1978, vol. 18 (12), 973-984
- HÜTTE, das Ingenieurwissen. 2004, 59 ff
- **M. S. FLOATER.** Derivatives of rational Bezier curves. *Comp. Aid. Geom. Design,* 1992, vol. 9, 161-174
- **PRESS ; TEUKOLSKY ; VETTERLING ; FLANNERY.** Numerical Recipes in FORTRAN. 180 ff